# EUROPEAN PATENT SPECIFICATION

(11) **EP 3 895 849 B1**
(45) Date of publication and mention of the grant of the patent: **06.03.2024**
(21) Application number: 20202424.6
(22) Date of filing: 16.10.2020
(51) Int. Cl.: B25H 3/00, G05B 19/4093

(54) **SMART CUTTING TOOL CART AND CUTTING TOOL CHANGING METHOD THEREOF**
INTELLIGENTER SCHNEIDWERKZEUGWAGEN UND SCHNEIDWERKZEUGWECHSELVERFAHREN DAFÜR
CHARIOT D'OUTIL DE COUPE INTELLIGENT ET SON PROCÉDÉ DE CHANGEMENT D'OUTIL DE COUPE

(30) Priority: 13.04.2020 TW 109112368
(43) Date of publication of application: 20.10.2021
(73) Proprietor: Da Shiang Automation Industrial Co., Ltd., Taoyuan City (TW)
(72) Inventor: Huang, Hao-Lun, Taoyuan City (TW)
(74) Representative: Cabinet Chaillot

(56) References cited:
- WO-A2-2017/083863
- CN-U- 207 014 333
- DE-A1-102006 024 904
- DE-A1-102018 111 547
- KR-A- 20160 074 169
- US-A1- 2008 117 053

## Description

The present invention relates to a tool cart, especially a smart cutting tool cart and a cutting tool changing method thereof.

Cutting tools are indispensable for CNC machine tools. For different machining methods, workpieces, and CNC machine tools, the required cutting tools are also different. A general machining factory usually has multiple CNC machine tools and a variety of workpieces; in addition, the cutting tools' life spans also need to be considered. As there are many types of cutting tools used in a general machining factory, the management of which often takes a lot of manpower and time to control the timing and timeliness of cutting tool changes, and to avoid using wrong cutting tools is essential, and to take into account the cutting tools' life spans is also required.

There are some tool carts, cutting tool management systems, and cutting tool magazine management systems available on current markets. Among them, the cutting tools checked out from the cutting tool magazine and the cutting tools to be returned to the cutting tool magazine all rely on the tool cart to do the intermediate transportation. The cutting tools checked out from the cutting tool magazine are sent to the machine tools on site via the tool cart, and then the cutting tools are mounted on the machine tools. The cutting tools dismounted from the machine tools are placed on the tool cart to be sent back to the cutting tool magazine. Hence, the cutting tools on the tool cart need to be managed and recorded so as to correctly track the cutting tools. However, the existing tool carts on current markets are not equipped with the functions to track the cutting tools, so that when the tool cart checks in and out the cutting tools, certain manpower will be required to record the cutting tools being checked in and out so as to make sure that they have been correctly tracked. The aforementioned cutting tool change flow and cutting tool management are time-consuming and error-prone, which often cause problems to both the cutting tool change flow of the tool cart and the cutting tool management, and even cause problems in the cutting tool management system and the cutting tool magazine management system. Therefore, solutions to resolve the issues of the aforementioned cutting tool change flow of the tool cart and the cutting tool management are urgently demanded.

DE 102018111547A1 recites a method for transmitting at least one tool setting data record of a cutting tool stored on a storage medium, a tool measurement data record of the cutting tool and / or a tool process data record of the cutting tool to a computerized numerical control-controlled machine tool (CNC machine tool), with a data communication unit, wherein in a tool delivery step at least the cutting tool is delivered to the CNC machine tool and wherein in a tool identification step the supplied cutting tool is identified by means of a tool identification unit. The method comprises a read-out step in which at least the tool setting data set of the cutting tool, at least the tool measurement data set of the cutting tool and / or at least the tool process data set of the cutting tool from the data communication unit is read from the storage medium and transmitted to a data processing unit assigned to the CNC machine tool. The storage medium is separated from the cutting tool, separated from a tool holder holding the cutting tool, and arranged separately from the CNC machine tool. This document also discloses the preamble of claim 1.

CN207014333U recites a tool cabinet especially relating to a working tool management cabinet, including a cabinet body, the cabinet body having a collector collecting operating personnel identity information, an RFID reader detecting working tools' electronic identity information, and an all-in-one touch controller; the collector and the RFID reader respectively connected with the all-in-one touch controller, and the at least one storage drawer which is used for depositing working tool. The automatic acquisition management is able to access working tool's data, to carry out intelligent management over authorities of the operating personnel, and to look over working tool states at any time, thereby verifying the authorization through the collector and then automatically opening the corresponding storage drawers.

DE102006024904A1 recites a method that involves assigning tool data to tools, and fixing the location of a tool in a central computer based on barcodes and the identification of a storage location. The central computer and/or the local computer are assigned to a roll car. A reading unit for identification data of tools and the storage location is attached to the central computer. A recording and or output unit for tool data is attached to the central computer and/or the local computer.

KR20160074169A recites a working tool storage device and a storage method thereof, capable of enabling a user to easily check working tools by visually displaying how the tools are stored. The working tool storage device and the storage method thereof are capable of securing the visibility of the tools and preventing the omission of assembly by including a case storing the tools, and various display parts, and preventing damage to the surface of the product by preventing scratches between the tools by separately storing the tools.

WO2017083863A2 recites a medical station and a method for using a medical cart. The station can be a portable cart that is movable, such as rollable, and has a computer system. Attached to the cart is a housing that communicates with the computer system. Insertable in the housing is a cassette system that includes a series of drawers. The drawers are openable and preferably closeable on command from a user. The drawers have a readable unique drawer identifier that is readable by sensors in the cassette. The cassette also preferably includes proximity sensors, while the drawers contain a target for the proximity sensors. In use, an operator, with proper credentials, can, through the computer system, identify a drawer to be opened by the computer system. The cassette and drawers can be removed from the housing and transported to another location for filling of the drawers with medications or other supplies.

US2008117053A1 recites an enhanced object tracking system for tracking and controlling access to a plurality of objects such as keys. The object tracking system implements many improvements including automated user identification using biometric data extracted from the user with a minimum of user interaction, tracking of objects both inside and outside their storage units, the locking of objects within slots of their storage unit to guard against illicit removal and return of keys and to insure random slot rotation, image and visual based inventory verification methodologies, and tracking of objects during times when they are checked out of the system.

In order to resolve the above problems, the present invention discloses "a smart cutting tool cart and a cutting tool changing method thereof". The technical content of "a smart cutting tool cart" of the present invention is described as follows:
A smart cutting tool cart, accommodating multiple cutting tools, wherein each of the multiple cutting tools is to be mounted on or dismounted from a machine tool, and the smart cutting tool cart is characterized by including:
a body;
at least one drawer, each of which is movably disposed in the body;
multiple cutting tool bases respectively disposed in each of the at least one drawer, and each of the multiple cutting tool bases configured to receive a cutting tool;
a cutting tool data reading base;
a controller, electrically connected to the cutting tool data reading base; wherein
the cutting tool data reading base is to read in an identification data of the cutting tool, and the identification data includes a product name, a material number or a product provenance, and the identification data is sent to the controller by the cutting tool data reading base; wherein
the controller is configured to confirm whether the cutting tool to be mounted on or dismounted from the machine tool is correct according to a received machine tool information and a work order information, as well as the identification data read by the cutting tool data reading base.

In one embodiment, a bottom of the body of the smart cutting tool cart is further provided with multiple wheels.

In one embodiment, each of the multiple cutting tool bases is further equipped with an LED light electrically connected to the controller and capable of emitting flashing light to indicate that either the cutting tool currently placed in the cutting tool base is to be mounted on the machine tool, or the cutting tool base is empty to receive the cutting tool dismounted from the machine tool.

In one embodiment, the smart cutting tool cart further includes a barcode reader electrically connected to the controller, wherein the barcode reader is to read in a machine tool information and a work order information from the machine tool, and the machine tool information and the work order information are sent by the barcode reader to the controller.

In one embodiment, the smart cutting tool cart further includes a display device electrically connected to the controller, wherein the display device is to display the cutting tool information, the work order information, the identification data and a user interface.

In one embodiment, the smart cutting tool cart further includes at least one electromagnetic latch lock electrically connected to the controller, wherein each of the at least one electromagnetic latch lock is respectively corresponding to and for locking one of the at least one drawer.

In one embodiment, the smart cutting tool cart further includes at least one proximity switch electrically connected to the controller, wherein each of the at least one proximity switch is respectively corresponding to and used for detecting the position of one of the at least one drawer, thereby determining whether said one of the at least one drawer is locked.

In one embodiment, the smart cutting tool cart further includes at least one electromagnetic lock electrically connected to the controller, wherein each of the at least one electromagnetic lock is respectively corresponding to and used to lock the cutting tool placed in one of the at least one cutting tool base.

In one embodiment, the smart cutting tool cart further includes at least one proximity sensor electrically connected to the controller, wherein each of the at least one proximity sensor is corresponding to one of the at least one cutting tool base, and each of the at least one proximity sensor is used for detecting whether any one of the cutting tools is present in the corresponding cutting tool base and correctly placed, thereby determining whether the cutting tool base can be locked to secure the cutting tool.

According to the present invention, the cutting tool data reading base further includes a cutting tool mounting recognition base and a cutting tool dismounted recognition base, respectively for receiving the cutting tool to be mounted on the machine tool and receiving the cutting tool dismounted from the machine tool; and the cutting tool data reading base also includes a first recognition sensor and a second recognition sensor, respectively used to sense the identification data of the cutting tool to be mounted on the machine tool and the identification data of the cutting tool dismounted from the machine tool.

In one embodiment, the cutting tool data reading base reads in the identification data of the cutting tool, based on RFID or NFC technology.

In one embodiment, the controller further includes a wireless transmission function that sends data to and receives data from an external server unit.

Next, the technical content of "a cutting tool changing method for a smart cutting tool cart" of the present invention is described below.

Provide a smart cutting tool cart and an external machine tool, and the smart cutting tool cart includes a barcode reader, a controller, at least one drawer, a cutting tool mounting recognition base, and a cutting tool dismounted recognition base, and the cutting tool changing method includes the following steps:
S1: Confirm the identification data of a cutting tool to be mounted on the machine tool and the identification data of a cutting tool to be dismounted from the machine tool; furthermore, confirm the cutting tool base that currently holds the cutting tool to be mounted on the machine tool, and confirm the cutting tool base that is to receive the cutting tool to be dismounted from the machine tool;
S2: Unlock the cutting tool base that currently holds the cutting tool to be mounted on the machine tool, and control an LED light of the cutting tool base to flash;
S3: Confirm that the identification data of the cutting tool to be mounted on the machine tool is correct, and control the LED light of the cutting tool base in step S2 to stop flashing;
S4: Send the cutting tool to be dismounted from the machine tool to a spindle position of the machine tool;
S5: Confirm the identification data of the cutting tool to be dismounted is correct, confirm the cutting tool base to receive the cutting tool to be dismounted is empty, confirm the cutting tool base is not locked, otherwise unlock the cutting tool base, and then control the LED light of the cutting tool base to flash;
S6: Control the LED light of the cutting tool base to stop flashing, and control the cutting tool base to lock the dismounted cutting tool;
S7: Mount the cutting tool to be mounted on the machine tool onto the spindle of the machine tool.

### In The Drawings:

FIGURE 1 is a schematic view of the smart cutting tool cart of the present invention;
FIGURE 2A is a schematic perspective view of the smart cutting tool cart of the present invention;
FIGURE 2B is a schematic view of the smart cutting tool cart of the present invention when an upper lid is opened;
FIGURE 3A is a schematic view of the drawer of the smart cutting tool cart of the present invention;
FIGURE 3B is another schematic view of the drawer of the smart cutting tool cart of the present invention;
FIGURE 4 is a schematic view of the cutting tool;
FIGURE 5 is a schematic view of the combination of the cutting tool base and the cutting tool;
FIGURE 6 is a schematic view of the cutting tool data reading base of the smart cutting tool cart of the present invention;
FIGURE 7 is the control block diagram of the smart cutting tool cart of the present invention;
FIGURES 8A, 8B are the cutting tool change flow charts of the smart cutting tool cart of the present invention;
FIGURE 9 is an application diagram of the smart cutting tool cart of the present invention.

In the following, the technical solutions in the embodiments of the present invention will be clearly and fully described with reference to the drawings in the embodiments of the present invention.

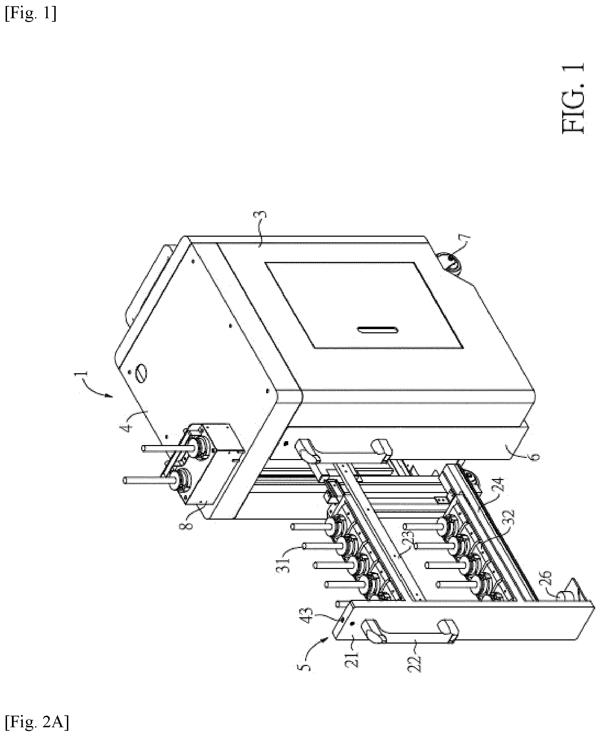

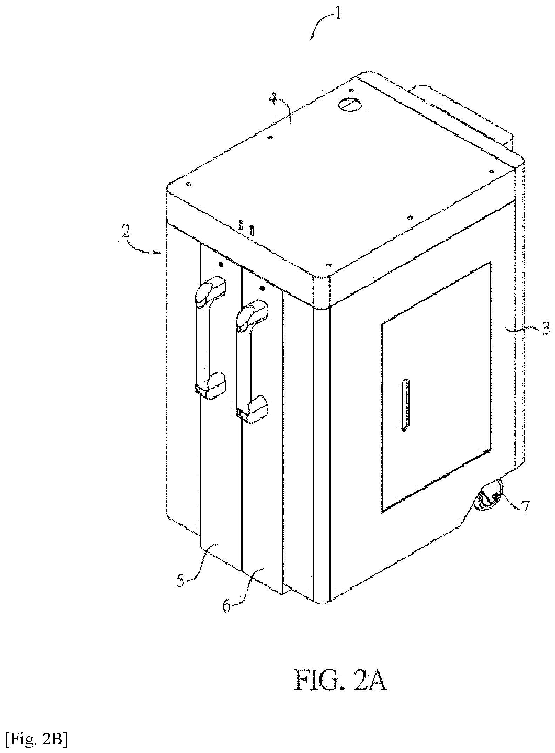

Please refer to FIG. 1 and FIG. 2A. FIG. 1 is a schematic view of the smart cutting tool cart of the present invention, and FIG. 2A is a schematic perspective view of the smart cutting tool cart of the present invention. In FIG 1 and FIG. 2A, the body of the smart cutting tool cart 1 of the present invention is mainly composed of a front face 2 and a rear face (not shown), a first side face 3 and a second side face (not shown), and an upper lid 4 and a bottom (not shown), thereby constituting an interior space accordingly. The front face 2 is provided with a first drawer 5 and a second drawer 6. The first drawer 5 and the second drawer 6 can accommodate multiple cutting tools 31 and multiple cutting tool bases 32 at the same time. When closed (as shown in FIG. 2A), the first drawer 5 and the second drawer 6 are located inside the cart, and when opened (as shown in FIG. 1), the first drawer 5 and the second drawer 6 can be pulled out of the interior space of the cart.

In addition, the bottom of the smart cutting tool cart 1 of the present invention has four corners and each of which is equipped with a wheel 7, so the smart cutting tool cart 1 of the present invention can be moved around on wheels. The smart cutting tool cart 1 of the present invention also has a cutting tool data reading base 8 provided on the upper lid 4, which can be accessed through RFID (Radio Frequency Identification) or other methods such as NFC (Near Field Communication) to read the identification data of the cutting tool 31, such as its product name, material number or product provenance.

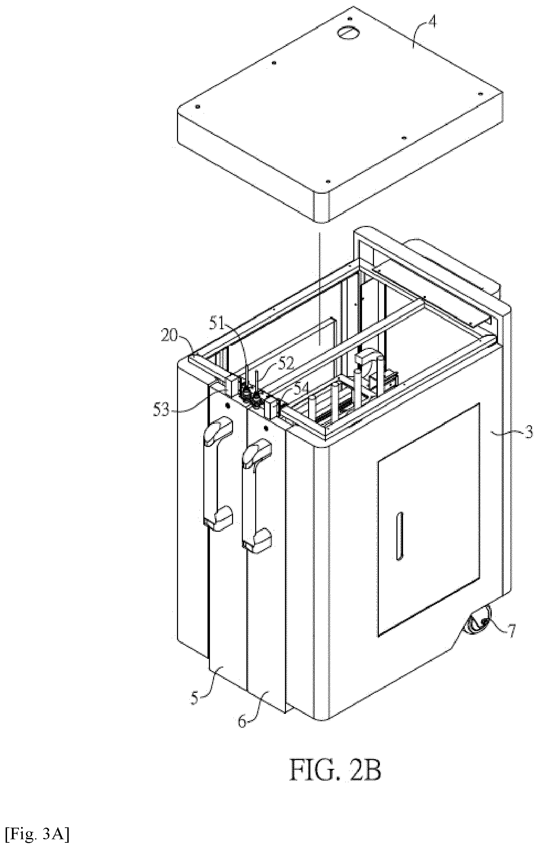

Please refer to FIG. 2B. In FIG. 2B, the upper lid 4 of the smart cutting tool cart 1 of the present invention is opened, and a first bracket frame 20 can be seen surrounding the top of the smart cutting tool cart 1 of the present invention; a first proximity switch 51 and a first electromagnetic latch lock 53 are fixed to the first bracket frame 20, wherein the first proximity switch 51 is used to detect whether the first drawer 5 is closed, so as to allow the activation of the first electromagnetic latch lock 53 to lock the first drawer 5 inside the smart cutting tool cart's interior space; similarly, a second proximity switch 52 and a second electromagnetic latch lock 54 are fixed to the first bracket frame 20, wherein the second proximity switch 52 is used to detect whether the second drawer 6 is closed, so as to allow the activation of the second electromagnetic latch lock 54 to lock the second drawer 6 inside the smart cutting tool cart's interior space.

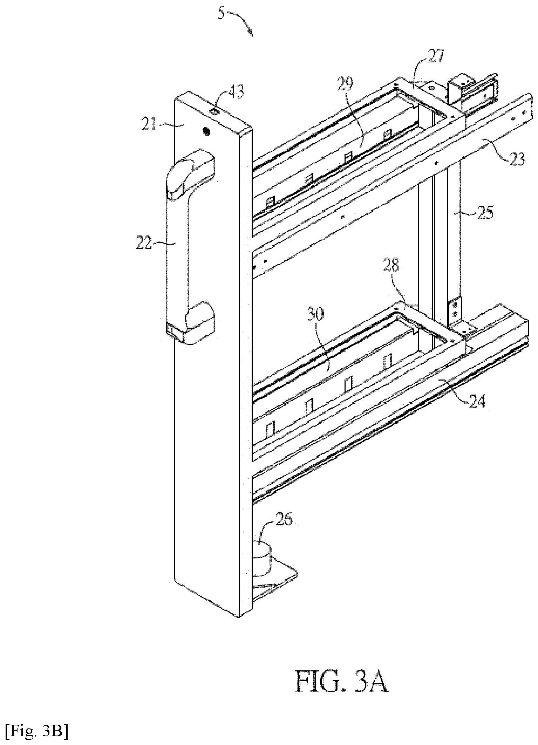

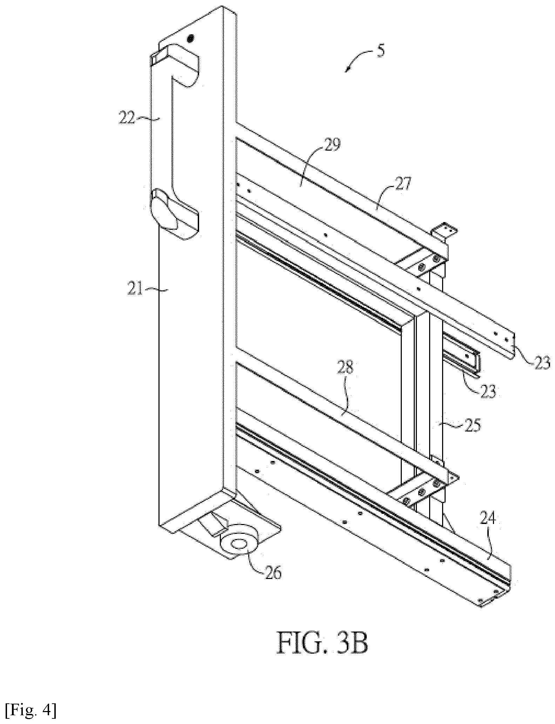

Please refer to FIGS. 3A and 3B. FIGS. 3A and 3B are schematic views of the drawer of the smart cutting tool cart of the present invention. In FIGS. 3A and 3B, the first drawer 5 has a first door 21 on which a first handle 22, a latch hole 43, a first bracket 23, a second bracket 24, a third bracket 25 and a bull's eye castor wheel 26 are disposed. The first handle 22 allows a personnel to pull open or push close the first drawer 5 with respect to the smart cutting tool cart 1. And the latch hole 43 is for receiving a bolt of the second electromagnetic latch lock 53 to lock the first drawer 5 so as to keep it closed. The bull's eye castor wheel 26 is an omnidirectional wheel, which is for carrying the weight of the first drawer 5 to enable the first drawer 5 to move.

One end of the first bracket 23 and one end of the second bracket 24 in the first drawer 5 are respectively fixed to the upper and lower ends of the first door 21, and the other ends of the first and second brackets 23, 24 are fixed to the upper and lower ends of the third bracket 25, respectively. A second bracket frame 27 and a third bracket frame 28 are respectively provided on the first bracket 23 and the second bracket 24, so that the first bracket 23 and the second bracket frame 27 jointly form a first accommodating space 29, and the second bracket 24 and the third bracket frame 28 jointly form a second accommodating space 30. Both the first accommodating space 29 and the second accommodating space 30 are used to accommodate multiple cutting tool bases 32 and multiple cutting tools 31. As for the second drawer 6, its structure and function are similar to those of the first drawer 5.

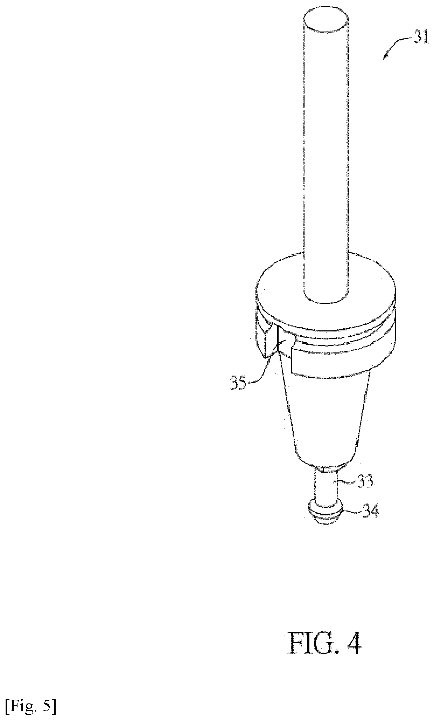

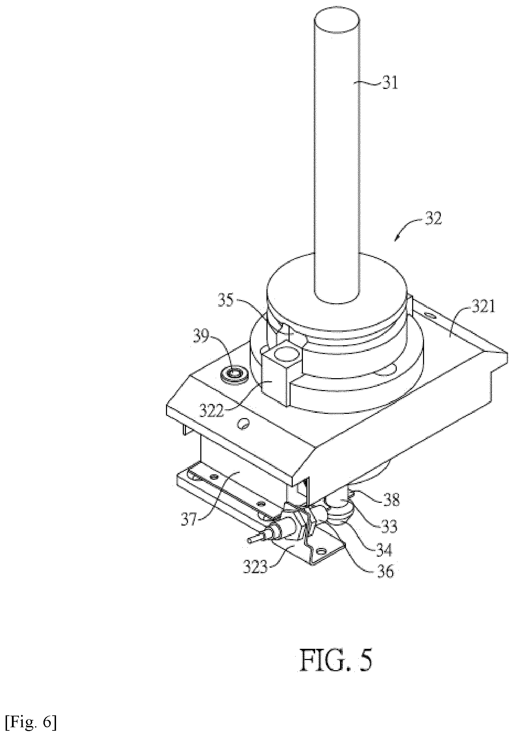

Please refer to FIG. 4 and FIG. 5. FIG. 4 is a schematic view of the cutting tool, and FIG. 5 is a schematic view of the combination of the cutting tool base and the cutting tool of the smart cutting tool cart of the present invention. In FIG. 4, the cutting tool 31 has a neck 33, a head 34, a fixing groove 35, and an RFID tag or an NFC tag (not shown). The RFID tag or the NFC tag is fixed opposite the fixing groove 35.

In FIG. 5, a cutting tool 31 is placed in a cutting tool base 32. The cutting tool base 32 has a platform 321. A fixed protrusion 322 is provided on the platform 321. The platform 321 has a hollow space, inside which the cutting tool 31 can be placed. Then, the fixing groove 35 of the cutting tool 31 is combined with the fixing protrusion 322 to ensure that the cutting tool 31 is correctly placed in the hollow space. The cutting tool base 32 also has a fixing plate 323, on which a proximity sensor 36 and an electromagnetic lock 37 are provided. The fixing plate 323, the proximity sensor 36 and the electromagnetic lock 37 are all located below the platform 321. When the cutting tool 31 is placed in the hollow space, a part of the cutting tool 31 including the neck 33 and the head 34 is located below the platform 321. If the proximity sensor 36 detects that the cutting tool 31 is in a correct position, the electromagnetic lock 37 is allowed to extend a bolt 38 to clamp the neck 33 of the cutting tool 31 so that the head 34 of the cutting tool 31 cannot come out, and the effect of locking the cutting tool 31 in the cutting tool base 32 can be achieved. In addition, the cutting tool base 32 further has an LED (Light Emitting Diode) light 39, which can be used to remind relevant personnel that a cutting tool 31 is to be received by or removed from the cutting tool base 32.

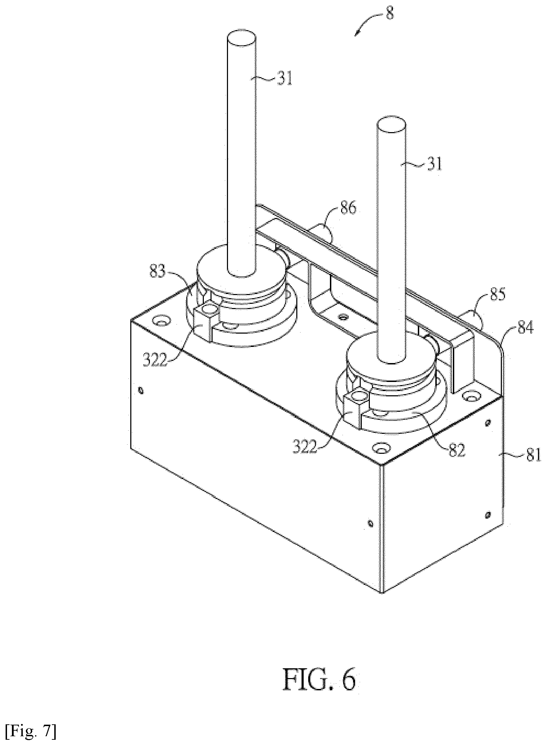

Please refer to FIG. 6. FIG. 6 is a schematic view of the cutting tool data reading base 8 of the smart cutting tool cart 1 of the present invention. In FIG. 6, the cutting tool data reading base 8 has a body 81, on which a cutting tool mounting recognition base 82 and a cutting tool dismounted recognition base 83 are provided, which are respectively used to receive a cutting tool 31 that will be mounted on the machine tool or to receive another cutting tool 31 that has been dismounted from the machine tool. The cutting tool data reading base 8, in addition, has a sensing surface 84, on which a first recognition sensor 85 and a second recognition sensor 86 are disposed. The first recognition sensor 85 and the second recognition sensor 86 are respectively used to sense the identification data of a cutting tool 31 to be mounted on the machine tool and the identification data of another cutting tool 31 that has been dismounted from the machine tool. When a cutting tool 31 is correctly placed on the cutting tool mounting recognition base 82 or the cutting tool dismounted recognition base 83, the identification data of the cutting tool 31 can be read respectively by the first recognition sensor 85 or the second recognition sensor 86, wherein, the cutting tool data reading base 8 can either sense the RFID tag of the cutting tool 31 by means of RFID, or sense the NFC tag of the cutting tool 31 by means of NFC.

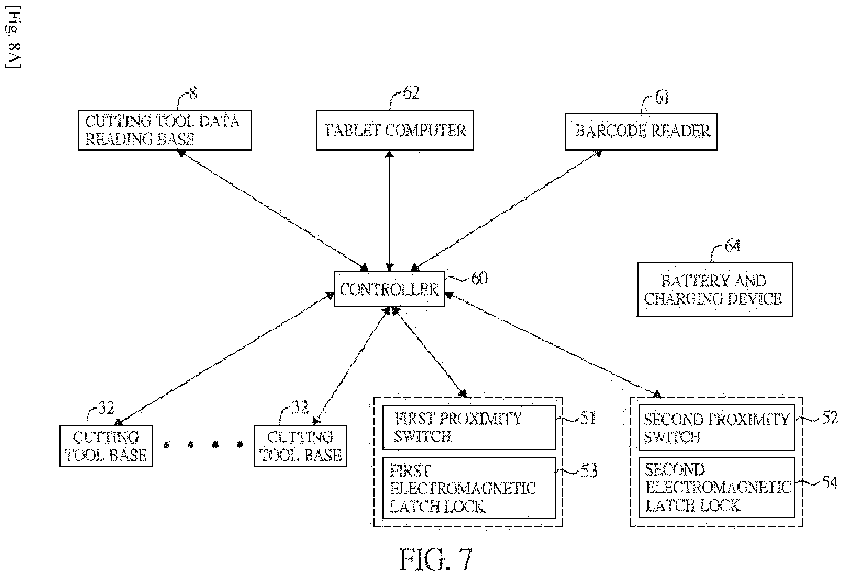

Please refer to FIG. 7. FIG. 7 is a control block diagram of the smart cutting tool cart 1 of the present invention. In FIG. 7, the smart cutting tool cart 1 of the present invention further has a controller 60, a barcode reader 61, a tablet computer 62, and a battery and charging device 64, wherein the controller 60 can be a circuit of a microcontroller or a microprocessor, or a computer system. The electromagnetic lock 37 and the proximity sensor 36 (refer to FIG. 5) of each of the multiple cutting tool bases 32 are electrically connected to the controller 60, wherein the proximity sensor 36 transmits its sensing results to the controller 60, so that the controller 60 can determine whether a cutting tool 31 has been correctly placed in the corresponding cutting tool base 32, only when the controller 60 determines that the cutting tool 31 has been correctly placed in the corresponding cutting tool base 32, will the controller 60 be able to control the electromagnetic lock 37 of the cutting tool base 32 (see FIG. 5) to lock or unlock the cutting tool 31. Each LED light 39 in the multiple cutting tool bases 32 is electrically connected to the controller 60, and the controller 60 can control the illumination state of each LED light 39 in the multiple cutting tool bases 32, such as flashing, continuously on, off, etc.

Likewise, both the first proximity switch 51 and the first electromagnetic latch lock 53 are electrically connected to the controller 60, wherein the first proximity switch 51 transmits its sensing results to the controller 60, so that the controller 60 can determine whether the first drawer 5 is in a correct closed position. When the controller 60 determines that the first drawer 5 is in the correct closed position, the controller 60 will be able to control the first electromagnetic latch lock 53 to lock or unlock the first drawer 5. Likewise, the second proximity switch 52 and the second electromagnetic latch lock 54 are electrically connected to the controller 60, and the second proximity switch 52 will transmit its sensing results to the controller 60 so that it can determine whether the second drawer 6 is in a correct closed position. When the controller 60 determines that the second drawer 6 is in the correct closed position, the controller 60 can control the second electromagnetic latch lock 54 to lock or unlock the second drawer 6.

The barcode reader 61 is electrically connected to the controller 60, wherein the barcode reader 61 can read a machine tool information and a work order information from a machine tool, and the work order information includes an identification data of the cutting tool 31 that is to be mounted on the machine tool. The machine tool information includes the identification data of the cutting tool 31 to be dismounted from the machine tool. The barcode reader 61 transmits the machine tool information and the work order information it reads in to the controller 60. The tablet computer 62 is electrically connected to the controller 60, and is used to display information and user interfaces to the personnel. The controller 60 further has wireless network transmission capabilities, such as Wi-Fi, which transmits data to or receives data from an external server unit (not shown).

The battery and charging device 64 is used to directly or indirectly provide power to the controller 60, the barcode reader 61, the tablet computer 62, each electromagnetic lock 37, each proximity sensor 36 and each LED light 39 of the multiple cutting tool bases 32, the first proximity switch 51 and the first electromagnetic latch lock 53, the second proximity switch 52 and the second electromagnetic latch lock 54, the first recognition sensor 85 and the second recognition sensor 86.

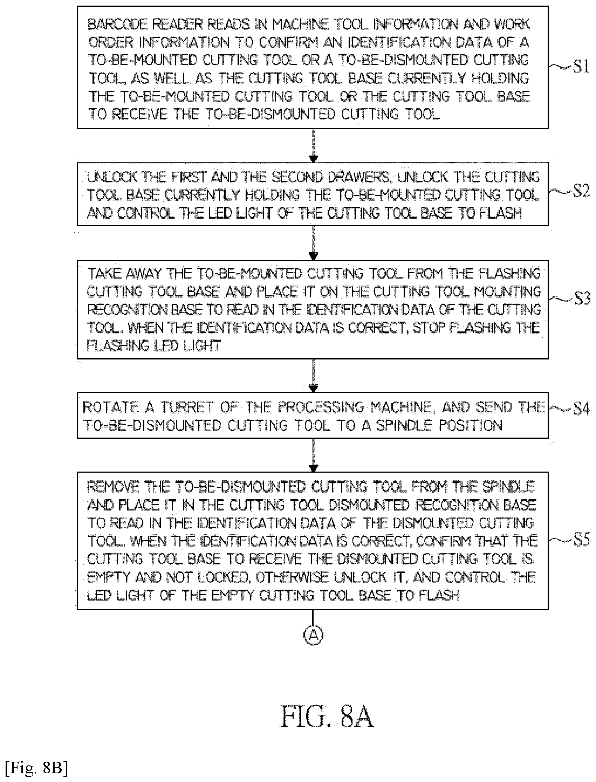

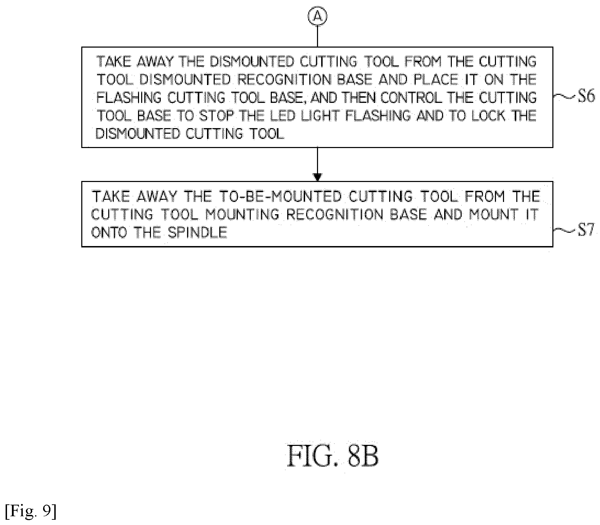

Please refer to FIGS. 8A, 8B. FIGS. 8A, 8B are the cutting tool change flow charts of the smart cutting tool cart of the present invention. The cutting tool change of the smart cutting tool cart of the present invention includes 7 steps, which are detailed as follows:
Step 1 (S1): The barcode reader 61 reads in a machine tool information and a work order information from a machine tool which are then transmitted to the controller 60 to confirm an identification data of a cutting tool 31 to be mounted on or dismounted from the machine tool. At the same time, the controller 60 identifies the cutting tool base 32 currently holding a cutting tool 31 to be mounted on the machine tool, and the empty cutting tool base 32 to receive a cutting tool 31 dismounted from the machine tool.
Step 2 (S2): The controller 60 controls the first electromagnetic latch lock 53 and the second electromagnetic latch lock 54 to unlock the first drawer 5 and the second drawer 6, respectively. The first drawer 5 and the second drawer 6 are then opened. The controller 60 controls and unlocks the electromagnetic lock 37 of the cutting tool base 32 currently holding the cutting tool 31 which is to be mounted on the machine tool, and the controller 60 controls the LED light 39 of the cutting tool base 32 to make it flash to remind the personnel to take away the cutting tool 31 from the cutting tool base 32.
Step 3 (S3): Remove the cutting tool 31 to be mounted on the machine tool from the cutting tool base 32 with flashing light as described in step 2 and place the cutting tool 31 on the cutting tool mounting recognition base 82. The first recognition sensor 85 of the cutting tool mounting recognition base 82 reads in the identification data of the cutting tool 31 to be mounted on the machine tool, and the identification data will be sent to the controller 60 for confirmation. When it is confirmed that the identification data is correct, the controller 60 controls the flashing LED light 39 of the cutting tool base 32 to stop flashing.
Step 4 (S4): Rotate a turret of the machine tool, and send the cutting tool 31 to be dismounted to a spindle position.
Step 5 (S5): Remove the cutting tool 31 to be dismounted, from the spindle of the machine tool, and place it in the cutting tool dismounted recognition base 83, and the second recognition sensor 86 of the cutting tool dismounted recognition base 83 reads in the identification data of the dismounted cutting tool 31, and sends the identification data to the controller 60 for confirmation. When the identification data is confirmed to be correct, the controller 60 will further confirm, via the proximity sensor 36 of the cutting tool base 32, that the cutting tool base 32 to receive the dismounted cutting tool 31 is empty; and the controller 60 will in addition confirm that the electromagnetic lock 37 of the empty cutting tool base 32 is not locked, otherwise the electromagnetic lock 37 will be unlocked, and then the controller 60 will control the LED light 39 of the empty cutting tool base 32 to start flashing to remind the personnel to put the dismounted cutting tool 31 in the empty cutting tool base 32.
Step 6 (S6): Remove the dismounted cutting tool 31 from the cutting tool dismounted recognition base 83 and place it on the cutting tool base 32 that flashes as described in Step 5, and then the controller 60 will confirm that the dismounted cutting tool 31 has been correctly placed, according to the sensing results sent from the proximity sensor 36 of the cutting tool base 32. Then the controller 60 will control the LED light 39 of the cutting tool base 32 to stop flashing, and control the electromagnetic lock 37 of the cutting tool base 32 to lock the dismounted cutting tool 31.
Step 7 (S7): Remove the cutting tool 31 to be mounted from the cutting tool mounting recognition base 82 and mount it on the spindle of the machine tool.

In summary, the smart cutting tool cart 1 of the present invention utilizes the controller 60, the barcode reader 61, the electromagnetic latch locks 53, 54, and the cutting tool base 32 including LED lights 39 to control and record the entire cutting tool change flow, thereby helping the personnel to mount the cutting tools and to avoid mistakes in handling the cutting tools. Because the smart cutting tool cart 1 of the present invention has wireless network transmission capability, it can also exchange information with a server unit in real time regarding the identification data and product provenance of the cutting tool 31 as well as the information about which cutting tools 31 are currently placed in which cutting tool bases 32. Hence the tracking of positions and product provenance of the cutting tools can be significantly facilitated. Accordingly, the smart cutting tool cart 1 of the present invention can achieve the purpose of the invention.

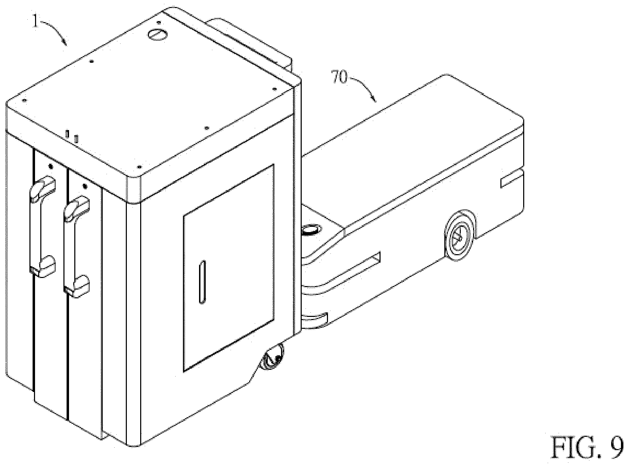

Please refer to Fig. 9. Fig. 9 is an application diagram of the smart cutting tool cart of the present invention. The smart cutting tool cart 1 of the present invention can cooperate with an automated guided vehicle (AGV) 70 having functions such as a vehicle dispatch map, Wi-Fi network transmission and a Wi-Fi positioning system. The smart tool cart 1 of the present invention and the automated guided vehicle 70 can further cooperate with an automatic cutting tool dispatching system, which can automatically dispatch the cutting tools to designated machine tools or designated cutting tool magazines, which can save a lot of manpower and avoid human errors.

In addition, the smart cutting tool cart 1 of the present invention can also cooperate with a cutting tool magazine management system. Through the server unit, the smart cutting tool cart 1 of the present invention can exchange cutting tools' positions and product provenance with the cutting tool magazine management system in real time. The cutting tool magazine management system can improve the efficiency and accuracy of the cutting tools' check-in and check-out of the cutting tool magazine.

Moreover, the smart cutting tool cart 1 of the present invention can also cooperate with a cutting tool management system. The smart cutting tool cart 1 of the present invention can exchange cutting tools' positions and product provenance with the cutting tool management system in real time through the server unit. The cutting tool management system can save the time of cutting tools comparison and increase the life spans of the cutting tools.

## Claims

1. A smart cutting tool cart (1), accommodating multiple cutting tools (31), wherein each of the multiple cutting tools (31) is to be mounted on or dismounted from a machine tool, and the smart cutting tool cart (1) including:
a body;
multiple cutting tool bases (32), each of the multiple cutting tool bases (32) configured to receive a cutting tool (31);
a cutting tool data reading base (8);
a controller (60), electrically connected to the cutting tool data reading base (8); wherein
the cutting tool data reading base (8) is to read in an identification data of the cutting tool (31), and the identification data includes a product name, a material number or a product provenance, and the identification data is sent to the controller (60) by the cutting tool data reading base (8);
**characterized in that**
the smart cutting tool cart (1) further comprises at least one drawer (5, 6), each of which is movably disposed in the body, the multiple cutting tool bases (32) being respectively disposed in each of the at least one drawer (5, 6);
the controller (60) is configured to confirm whether the cutting tool (31) to be mounted on or dismounted from the machine tool is correct according to a received machine tool information and a work order information, as well as the identification data read by the cutting tool data reading base (8); and
the cutting tool data reading base (8) further includes a cutting tool mounting recognition base (82) and a cutting tool dismounted recognition base (83), respectively for receiving the cutting tool (31) to be mounted on the machine tool and receiving the cutting tool (31) dismounted from the machine tool; and the cutting tool data reading base (8) also includes a first recognition sensor (85) and a second recognition sensor (86), respectively used to sense the identification data of the cutting tool (31) to be mounted on the machine tool and the identification data of the cutting tool (31) dismounted from the machine tool.

2. The smart cutting tool cart as claimed in claim 1, wherein a bottom of the body is further provided with multiple wheels (7).

3. The smart cutting tool cart as claimed in claim 1, wherein each of the multiple cutting tool bases (32) is further equipped with an LED light (39) electrically connected to the controller (60) and capable of emitting flashing light to indicate that either the cutting tool (31) currently placed in the cutting tool base (32) is to be mounted on the machine tool, or the cutting tool base (32) is empty to receive the cutting tool (31) dismounted from the machine tool.

4. The smart cutting tool cart as claimed in claim 1, further including a barcode reader (61) electrically connected to the controller (60), wherein the barcode reader (61) is to read in a machine tool information and a work order information from the machine tool, and the machine tool information and the work order information are sent by the barcode reader (61) to the controller (60).

5. The smart cutting tool cart as claimed in claim 1, further including a display device electrically connected to the controller (60), wherein the display device is to display the cutting tool (31) information, the work order information, the identification data and a user interface.

6. The smart cutting tool cart as claimed in claim 1, further including at least one electromagnetic latch lock (53, 54) electrically connected to the controller (60), wherein each of the at least one electromagnetic latch lock (53, 54) is respectively corresponding to and for locking one of the at least one drawer (5, 6).

7. The smart cutting tool cart as claimed in claim 1, further including at least one proximity switch (51, 52) electrically connected to the controller (60), wherein each of the at least one proximity switch (51, 52) is respectively corresponding to and used for detecting the position of one of the at least one drawer (5, 6), thereby determining whether said one of the at least one drawer (5, 6) can be locked.

8. The smart cutting tool cart as claimed in claim 1, further including at least one electromagnetic lock (37) electrically connected to the controller (60), wherein each of the at least one electromagnetic lock (37) is respectively corresponding to and used to lock the cutting tool (31) placed in one of the multiple cutting tool bases (32).

9. The smart cutting tool cart as claimed in claim 1, further including at least one proximity sensor (36) electrically connected to the controller (60), wherein each of the at least one proximity sensor (36) is corresponding to one of the multiple cutting tool bases (32), and each of the at least one proximity sensor (36) is used for detecting whether any one of the cutting tools (31) is present in the corresponding cutting tool base (32) and correctly placed, thereby determining whether the cutting tool base (32) can be locked to secure the cutting tool (31).

10. The smart cutting tool cart as claimed in claim 1, wherein the cutting tool data reading base (8) reads in the identification data of the cutting tool (31), based on RFID or NFC technology.

11. The smart cutting tool cart as claimed in claim 1, wherein the controller (60) further includes a wireless transmission function that sends data to and receives data from an external server unit.

12. A cutting tool changing method for a smart cutting tool cart, **characterized by** providing a smart cutting tool cart (1) and an external machine tool, and the smart cutting tool cart (1) including a barcode reader (61), a controller (60), at least one drawer (5, 6), a cutting tool mounting recognition base (82), and a cutting tool dismounted recognition base (83), and the cutting tool changing method includes the following steps:
S1: confirming the identification data of a cutting tool (31) to be mounted on the machine tool and the identification data of a cutting tool (31) to be dismounted from the machine tool; furthermore, confirming the cutting tool base (32) that currently holds the cutting tool (31) to be mounted on the machine tool, and confirming the cutting tool base (32) that is to receive the cutting tool (31) to be dismounted from the machine tool;
S2: unlocking the cutting tool base (32) that currently holds the cutting tool (31) to be mounted on the machine tool, and controlling an LED light (39) of the cutting tool base (32) to flash;
S3: confirming that the identification data of the cutting tool (31) to be mounted on the machine tool is correct, and controlling the LED light (39) of the cutting tool base (32) in step S2 to stop flashing;
S4: sending the cutting tool (31) to be dismounted from the machine tool to a spindle position of the machine tool;
S5: confirming the identification data of the cutting tool (31) to be dismounted is correct, confirming the cutting tool base (32) to receive the cutting tool (31) to be dismounted is empty, confirming the cutting tool base (32) is not locked, otherwise unlocking the cutting tool base (32), and then controlling the LED light (39) of the cutting tool base (32) to flash;
S6: controlling the LED light (39) of the cutting tool base (32) to stop flashing, and controlling the cutting tool base (32) to lock the dismounted cutting tool (31);
S7: mounting the cutting tool (31) to be mounted on the machine tool onto the spindle of the machine tool.

## Patentansprüche

1. - Intelligenter Schneidewerkzeugwagen (1), der mehrere Schneidewerkzeuge (31) aufnimmt, wobei jedes der mehreren Schneidewerkzeuge (31) in einer Werkzeugmaschine montiert oder daraus demontiert werden soll, und der intelligente Schneidewerkzeugwagen (1) Folgendes beinhaltet:
einen Körper;
mehrere Schneidwerkzeugsockel (32), wobei jeder der mehreren Schneidwerkzeugsockel (32) zum Aufnehmen eines Schneidwerkzeugs (31) konfiguriert ist;
eine Schneidwerkzeugdaten-Lesebasis (8);
eine Steuerung (60), die elektrisch mit der Schneidwerkzeugdaten-Lesebasis (8) verbunden ist; wobei
wobei die Schneidwerkzeugdaten-Lesebasis (8) dazu dient, Identifizierungsdaten des Schneidwerkzeugs (31) einzulesen, und die Identifizierungsdaten einen Produktnamen, eine Materialnummer oder eine Produktherkunft beinhalten, und die Identifizierungsdaten von der Schneidwerkzeugdaten-Lesebasis (8) an die Steuerung (60) gesendet werden;
**dadurch gekennzeichnet, dass**
der intelligente Schneidwerkzeugwagen (1) ferner mindestens ein Schubfach (5, 6) umfasst, wovon jedes beweglich in dem Körper angeordnet ist, wobei die mehreren Schneidwerkzeugsockel (32) jeweils in jedem von dem mindestens einen Schubfach (5, 6) angeordnet sind;
die Steuerung (60) konfiguriert ist, um zu bestätigen, ob das Schneidwerkzeug (31), das an der Werkzeugmaschine montiert oder daraus demontiert werden soll, gemäß empfangener Werkzeugmaschineninformationen und Arbeitsauftragsinformationen sowie den von der Schneidwerkzeugdaten-Lesebasis (8) gelesenen Identifizierungsdaten korrekt ist; und
wobei die Schneidwerkzeugdaten-Lesebasis (8) ferner eine Schneidwerkzeugmontage-Erkennungsbasis (82) und eine Schneidwerkzeugdemontage-Erkennungsbasis (83) zum Aufnehmen des Schneidwerkzeugs (31), das in der Werkzeugmaschine montiert werden soll, bzw. zum Aufnehmen des Schneidwerkzeugs (31), das aus der Werkzeugmaschine demontiert werden soll beinhaltet; und die Schneidwerkzeugdaten-Lesebasis (8) auch einen ersten Erkennungssensor (85) und einen zweiten Erkennungssensor (86) umfasst, die jeweils verwendet werden, um die Identifizierungsdaten des Schneidwerkzeugs (31), das in der Werkzeugmaschine montiert werden soll, und die Identifizierungsdaten des Schneidwerkzeugs (31), das aus der Werkzeugmaschine demontiert wird, zu erfassen.

2. - Intelligenter Schneidwerkzeugwagen nach Anspruch 1, wobei ein Boden des Körpers ferner mit mehreren Rädern (7) versehen ist.

3. - Intelligenter Schneidewerkzeugwagen nach Anspruch 1, wobei jeder der mehreren Schneidewerkzeugsockel (32) ferner mit einer LED-Leuchte (39) ausgestattet ist, die elektrisch mit der Steuerung (60) verbunden ist und in der Lage ist, ein Blinklicht zu emittieren, um anzugeben, dass entweder das Schneidewerkzeug (31), das gegenwärtig in dem Schneidewerkzeugsockel (32) platziert ist, in der Werkzeugmaschine montiert werden soll, oder dass der Schneidewerkzeugsockel (32) leer ist, um das von der Werkzeugmaschine demontierte Schneidewerkzeug (31) aufzunehmen.

4. - Intelligenter Schneidwerkzeugwagen nach Anspruch 1, der ferner einen Strichcodeleser (61) beinhaltet, der elektrisch mit der Steuerung (60) verbunden ist, wobei der Strichcodeleser (61) dazu dient, Werkzeugmaschineninformationen und Arbeitsauftragsinformationen von der Werkzeugmaschine einzulesen, und die Werkzeugmaschineninformationen und die Arbeitsauftragsinformationen von dem Strichcodeleser (61) an die Steuerung (60) gesendet werden.

5. - Intelligenter Schneidwerkzeugwagen nach Anspruch 1, der ferner eine Anzeigevorrichtung beinhaltet, die elektrisch mit der Steuerung (60) verbunden ist, wobei die Anzeigevorrichtung dazu dient, die Informationen des Schneidwerkzeug (31), die Arbeitsauftragsinformationen, die Identifizierungsdaten und eine Benutzeroberfläche anzuzeigen.

6. - Intelligenter Schneidwerkzeugwagen nach Anspruch 1, der ferner mindestens ein elektromagnetisches Verriegelungsschloss (53, 54) beinhaltet, das elektrisch mit der Steuerung (60) verbunden ist, wobei jedes von dem mindestens einen elektromagnetischen Verriegelungsschloss (53, 54) jeweils einem von dem mindestens einen Schubfach (5, 6) entspricht und dessen Verriegeln dient.

7. - Intelligenter Schneidwerkzeugwagen nach Anspruch 1, der ferner mindestens einen Näherungsschalter (51, 52) beinhaltet, der elektrisch mit der Steuerung (60) verbunden ist, wobei jeder von dem mindestens einen Näherungsschalter (51, 52) jeweils der Position von einem des mindestens einen Schubfachs (5, 6) entspricht und dazu verwendet wird, dieses zu erfassen, wodurch bestimmt wird, ob das mindestens eine Schubfach (5, 6) verriegelt werden kann.

8. - Intelligenter Schneidwerkzeugwagen nach Anspruch 1, der ferner mindestens eine elektromagnetische Verriegelung (37) beinhaltet, die elektrisch mit dem Steuergerät (60) verbunden ist, wobei jede von der mindestens einen elektromagnetischen Verriegelung (37) jeweils dem Schneidwerkzeug (31) entspricht, das in einem der mehreren Schneidwerkzeugsockel (32) platziert ist, und zu dessen Verriegeln verwendet wird.

9. - Intelligenter Schneidwerkzeugwagen nach Anspruch 1, der ferner mindestens einen Näherungssensor (36) beinhaltet, der elektrisch mit der Steuerung (60) verbunden ist, wobei jeder von dem mindestens einen Näherungssensor (36) einem der mehreren Schneidwerkzeugsockel (32) entspricht und jeder von dem mindestens einen Näherungssensor (36) dazu verwendet wird, zu erkennen, ob eines der Schneidwerkzeuge (31) in dem entsprechenden Schneidwerkzeugsockel (32) vorhanden und korrekt platziert ist, wodurch bestimmt wird, ob der Schneidwerkzeugsockel (32) verriegelt werden kann, um das Schneidwerkzeug (31) zu sichern.

10. - Intelligenter Schneidewagen nach Anspruch 1, wobei die Schneidewerkzeugdaten-Lesebasis (8) die Identifizierungsdaten des Schneidewerkzeugs (31) basierend auf RFID- oder NFC-Technologie einliest.

11. - Intelligenter Schneidwerkzeugwagen nach Anspruch 1, wobei die Steuerung (60) ferner eine drahtlose Übertragungsfunktion beinhaltet, die Daten an eine externe Servereinheit sendet und davon empfängt.

12. - Schneidwerkzeugwechselverfahren für einen intelligenten Schneidwerkzeugwagen, **gekennzeichnet durch** Bereitstellen eines intelligenten Schneidwerkzeugwagens (1) und einer externen Werkzeugmaschine, wobei der intelligente Schneidwerkzeugwagen (1) einen Strichcodeleser (61), eine Steuerung (60), mindestens ein Schubfach (5, 6), eine Schneidwerkzeugmontage-Erkennungsbasis (82) und eine Schneidwerkzeugdemontage-Erkennungsbasis (83) beinhaltet und das Schneidwerkzeugwechselverfahren die folgenden Schritte beinhaltet:
S1: Bestätigen der Identifizierungsdaten eines Schneidwerkzeugs (31), das in der Werkzeugmaschine montiert werden soll und der Identifizierungsdaten eines Schneidwerkzeugs (31), das aus der Werkzeugmaschine demontiert werden soll; außerdem Bestätigen des Schneidwerkzeugsockels (32), der gegenwärtig das Schneidwerkzeug (31) hält, das in der Werkzeugmaschine montiert werden soll, und Bestätigen des Schneidwerkzeugsockels (32), der das Schneidwerkzeug (31) aufnehmen soll, das aus der Werkzeugmaschine demontiert werden soll;
S2: Entriegeln des Schneidwerkzeugsockels (32), der gegenwärtig das Schneidwerkzeug (31) hält, das in der Werkzeugmaschine montiert werden soll, und Steuern einer LED-Leuchte (39) des Schneidwerkzeugsockels (32), um aufzublinken;
S3: Bestätigen, dass die Identifizierungsdaten des Schneidwerkzeugs (31), das in der Werkzeugmaschine montiert werden soll, korrekt sind, und Steuern der LED-Leuchte (39) des Schneidwerkzeugsockels (32) in Schritt S2, um ein Aufblinken zu beenden;
S4: Senden des Schneidwerkzeugs (31), das aus der Werkzeugmaschine demontiert werden soll, an eine Spindelposition der Werkzeugmaschine;
S5: Bestätigen, dass die Identifizierungsdaten des Schneidwerkzeugs (31), das demontiert werden soll, korrekt sind, Bestätigen, dass der Schneidwerkzeugsockel (32) zum Aufnehmen des Schneidwerkzeugs (31), das demontiert werden soll, leer ist, Bestätigen, dass der Schneidwerkzeugsockel (32) nicht verriegelt ist, andernfalls Entriegeln des Schneidwerkzeugsockels (32), und dann Steuern der LED-Leuchte (39) des Schneidwerkzeugsockels (32), um aufzublinken;
S6: Steuern der LED-Leuchte (39) des Schneidwerkzeugsockels (32), um das Aufblinken zu beenden, und Steuern des Schneidwerkzeugsockels (32), um das demontierte Schneidwerkzeug (31) zu verriegeln;
S7: Montieren des Schneidwerkzeugs (31), das in der Werkzeugmaschine montiert werden soll, auf der Spindel der Werkzeugmaschine.

## Revendications

1. - Chariot d'outils de coupe intelligent (1), recevant de multiples outils de coupe (31), chacun des multiples outils de coupe (31) étant destiné à être monté sur ou démonté d'une machine-outil, et le chariot d'outils de coupe intelligent (1) comprenant :
un corps ;
de multiples bases d'outil de coupe (32), chacune des multiples bases d'outil de coupe (32) étant configurée pour recevoir un outil de coupe (31) ;
une base de lecture de données d'outil de coupe (8) ;
une unité de commande (60), connectée électriquement à la base de lecture de données d'outil de coupe (8) ;
la base de lecture de données d'outil de coupe (8) étant destinée à lire une donnée d'identification de l'outil de coupe (31), et la donnée d'identification comprenant un nom de produit, un numéro de matériau ou une provenance de produit, et la donnée d'identification étant envoyée à l'unité de commande (60) par la base de lecture de données d'outil de coupe (8) ;
**caractérisé par le fait que**
le chariot d'outils de coupe intelligent (1) comprend en outre au moins un tiroir (5, 6), dont chacun est disposé de manière mobile dans le corps, les multiples bases d'outil de coupe (32) étant respectivement disposées dans chacun de l'au moins un tiroir (5, 6) ;
l'unité de commande (60) est configurée pour confirmer si l'outil de coupe (31) à monter sur la machine-outil ou à démonter de celle-ci est correct en fonction d'une information de machine-outil reçue et d'une information d'ordre de travail, ainsi que la donnée d'identification lue par la base de lecture de données d'outil de coupe (8) ; et
la base de lecture de données d'outil de coupe (8) comprend en outre une base de reconnaissance de montage d'outil de coupe (82) et une base de reconnaissance de démontage d'outil de coupe (83), respectivement pour recevoir l'outil de coupe (31) à monter sur la machine-outil et pour recevoir l'outil de coupe (31) démonté de la machine-outil ; et la base de lecture de données d'outil de coupe (8) comprend également un premier capteur de reconnaissance (85) et un second capteur de reconnaissance (86), utilisés respectivement pour détecter la donnée d'identification de l'outil de coupe (31) à monter sur la machine-outil et la donnée d'identification de l'outil de coupe (31) démonté de la machine-outil.

2. - Chariot d'outils de coupe intelligent selon la revendication 1, dans lequel une partie inférieure du corps comporte en outre de multiples roues (7).

3. - Chariot d'outils de coupe intelligent selon la revendication 1, dans lequel chacune des multiples bases d'outil de coupe (32) est en outre équipée d'une lumière à DEL (39) connectée électriquement à l'unité de commande (60) et apte à émettre une lumière clignotante pour indiquer que l'outil de coupe (31) actuellement placé dans la base d'outil de coupe (32) est à monter sur la machine-outil, ou que la base d'outil de coupe (32) est vide pour recevoir l'outil de coupe (31) démonté de la machine-outil.

4. - Chariot d'outils de coupe intelligent selon la revendication 1, comprenant en outre un lecteur de code à barres (61) connecté électriquement à l'unité de commande (60), le lecteur de code à barres (61) étant destiné à lire une information de machine-outil et une information d'ordre de travail de la machine-outil, et l'information de machine-outil et l'information d'ordre de travail sont envoyées par le lecteur de code à barres (61) à l'unité de commande (60).

5. - Chariot d'outils de coupe intelligent selon la revendication 1, comprenant en outre un dispositif d'affichage connecté électriquement à l'unité de commande (60), le dispositif d'affichage étant destiné à afficher l'information d'outil de coupe (31), l'information d'ordre de travail, la donnée d'identification et une interface utilisateur.

6. - Chariot d'outils de coupe intelligent selon la revendication 1, comprenant en outre au moins un verrou électromagnétique (53, 54) connecté électriquement à l'unité de commande (60), chacun de l'au moins un verrou électromagnétique (53, 54) correspondant respectivement à l'un de l'au moins un tiroir (5, 6) et servant à le verrouiller.

7. - Chariot d'outils de coupe intelligent selon la revendication 1, comprenant en outre au moins un détecteur de proximité (51, 52) connecté électriquement à l'unité de commande (60), chacun de l'au moins un détecteur de proximité (51, 52) correspondant respectivement à la position de l'un de l'au moins un tiroir (5, 6) et étant utilisé pour la détecter, déterminant ainsi si ledit tiroir de l'au moins un tiroir (5, 6) peut être verrouillé ou non.

8. - Chariot d'outils de coupe intelligent selon la revendication 1, comprenant en outre au moins un verrou électromagnétique (37) connecté électriquement à l'unité de commande (60), chacun de l'au moins un verrou électromagnétique (37) correspondant respectivement à l'outil de coupe (31) placé dans l'une des multiples bases d'outil de coupe (32) et étant utilisé pour le verrouiller.

9. - Chariot d'outils de coupe intelligent selon la revendication 1, comprenant en outre au moins un capteur de proximité (36) connecté électriquement à l'unité de commande (60), chacun de l'au moins un capteur de proximité (36) correspondant à l'une des multiples bases d'outil de coupe (32), et chacun de l'au moins un capteur de proximité (36) étant utilisé pour détecter si l'un quelconque des outils de coupe (31) est présent dans la base d'outil de coupe correspondante (32) et correctement placé ou non, déterminant ainsi si la base d'outil de coupe (32) peut être verrouillée ou non pour sécuriser l'outil de coupe (31) .

10. - Chariot d'outils de coupe intelligent selon la revendication 1, dans lequel la base de lecture de données d'outil de coupe (8) lit la donnée d'identification de l'outil de coupe (31), sur la base d'une technologie d'identification par radiofréquence ou de communication en champ proche.

11. - Chariot d'outils de coupe intelligent selon la revendication 1, dans lequel l'unité de commande (60) comprend en outre une fonction de transmission sans fil qui envoie des données à une unité de serveur externe et reçoit des données en provenance de celle-ci.

12. - Procédé de changement d'outil de coupe pour un chariot d'outils de coupe intelligent, **caractérisé par** la disposition d'un chariot d'outils de coupe intelligent (1) et d'une machine-outil externe, et le chariot d'outils de coupe intelligent (1) comprenant un lecteur de code à barres (61), une unité de commande (60), au moins un tiroir (5, 6), une base de reconnaissance de montage d'outil de coupe (82) et une base de reconnaissance de démontage d'outil de coupe (83), et le procédé de changement d'outil de coupe comprend les étapes suivantes :
51 : confirmer la donnée d'identification d'un outil de coupe (31) à monter sur la machine-outil et la donnée d'identification d'un outil de coupe (31) à démonter de la machine-outil ; en outre, confirmer la base d'outil de coupe (32) qui maintient actuellement l'outil de coupe (31) à monter sur la machine-outil, et confirmer la base d'outil de coupe (32) qui est destinée à recevoir l'outil de coupe (31) à démonter de la machine-outil ;
S2 : déverrouiller la base d'outil de coupe (32) qui maintient actuellement l'outil de coupe (31) à monter sur la machine-outil, et commander un clignotement d'une lumière à DEL (39) de la base d'outil de coupe (32) ;
53 : confirmer que la donnée d'identification de l'outil de coupe (31) à monter sur la machine-outil est correcte, et commander l'arrêt du clignotement de la lumière à DEL (39) de la base d'outil de coupe (32) à l'étape S2 ;
54 : envoyer l'outil de coupe (31) à démonter de la machine-outil à une position de broche de la machine-outil ;
S5 : confirmer que la donnée d'identification de l'outil de coupe (31) à démonter est correcte, confirmer que la base d'outil de coupe (32) destinée à recevoir l'outil de coupe (31) à démonter est vide, confirmer que la base d'outil de coupe (32) n'est pas verrouillée, sinon déverrouiller la base d'outil de coupe (32), puis commander un clignotement de la lumière à DEL (39) de la base d'outil de coupe (32) ;
S6 : commander l'arrêt du clignotement de la lumière à DEL (39) de la base d'outil de coupe (32), et commander la base d'outil de coupe (32) pour verrouiller l'outil de coupe (31) démonté ;
S7 : monter l'outil de coupe (31) à monter sur la machine-outil sur la broche de la machine-outil.
